# EUROPEAN PATENT APPLICATION

(11) **EP 3 483 054 A1**
(43) Date of publication of application: **15.05.2019**
(21) Application number: 17824288.9
(22) Date of filing: 05.07.2017
(51) Int. Cl.: B63B 25/16, B63H 21/14, B63H 21/38, B63J 2/14, F02B 43/00, F02M 21/02, F02M 31/16, F02M 31/20

(54) **SHIP**

(30) Priority: 07.07.2016 JP 2016134756
(71) Applicant: Kawasaki Jukogyo Kabushiki Kaisha, Kobe-shi, Hyogo 650-8670 (JP)
(72) Inventor: SHINMURA, Nobuhiro, Hyogo 650-8670 (JP); IWASAKI, Hidekazu, Hyogo 650-8670 (JP); TAKATA, Hirotaka, Hyogo 650-8670 (JP); ANDOH, Akihiro, Hyogo 650-8670 (JP); TAKEDA, Hiroyuki, Hyogo 650-8670 (JP); INDOH, Naoko, Hyogo 650-8670 (JP)
(74) Representative: Dehns
(86) International application number: PCT/JP2017/024659
(87) International publication number: WO 2018/008685

(57) **Abstract**

A ship includes: a gas-consuming apparatus for propulsion; a tank storing liquefied natural gas; a first supply line provided with a compressor, the first supply line leading boil off gas generated in the tank to the gas-consuming apparatus; a branch line whose both ends are connected to the first supply line at an upstream side of the compressor; a second supply line that takes the liquefied natural gas out of the tank, and leads vaporization gas resulting from vaporization of the liquefied natural gas to the gas-consuming apparatus or another gas-consuming apparatus; a heat exchanger that performs heat exchange between the liquefied natural gas flowing through the second supply line and the boil off gas flowing through the branch line; an adjustment valve that adjusts a flow rate of the boil off gas flowing through the branch line; and a controller that controls the adjustment valve such that, under a predetermined condition, a temperature of the liquefied natural gas flowing out of the heat exchanger is kept to a setting temperature.

## Description

### Technical Field

The present invention relates to a ship including a gas-consuming apparatus for propulsion.

### Background Art

Conventionally, a reciprocating engine, a gas turbine engine, a gas-fired boiler, or the like is used as a gas-consuming apparatus for propulsion of a ship. For example, Patent Literature 1 discloses a ship 100 as shown in Fig. 4. The ship 100 includes a main reciprocating engine 130 as a gas-consuming apparatus for propulsion. The main reciprocating engine 130 uses, as a fuel gas, boil off gas that is generated in a tank 110 storing liquefied natural gas.

Specifically, in the ship 100 disclosed in Patent Literature 1, the boil off gas is led from the tank 110 to the main reciprocating engine 130 through a first main supply line 120. The first main supply line 120 is provided with a high-pressure compressor 121.

An auxiliary supply line 140 extends from the middle part of the high-pressure compressor 121, and the auxiliary supply line 140 is connected to an auxiliary reciprocating engine 150. The auxiliary reciprocating engine 150 is a dual fuel engine. When the amount of boil off gas generation is greater than the amount of gas consumption by the main reciprocating engine 130, excess gas is supplied to the auxiliary reciprocating engine 150 through the auxiliary supply line 140.

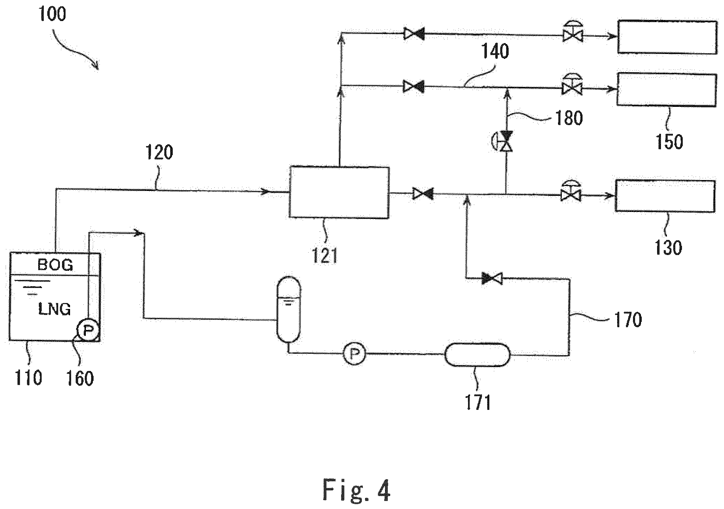

The ship 100 shown in Fig. 4 further adopts a configuration for supplying a sufficient amount of fuel gas to the main reciprocating engine 130 when the amount of boil off gas generation is less than the amount of gas consumption by the main reciprocating engine 130. Specifically, a pump 160 is disposed in the tank 110, and a second main supply line 170 extends from the pump 160. The second main supply line 170 is connected to the first main supply line 120 at the downstream side of the high-pressure compressor 121. The second main supply line 170 is provided with a forcing vaporizer 171, which forcibly vaporizes the liquefied natural gas. The first main supply line 120 is connected to the auxiliary supply line 140 at the downstream side of the high-pressure compressor 121 by a connecting line 180. That is, the second main supply line 170 can lead the vaporization gas generated at the forcing vaporizer 171 to both the main reciprocating engine 130 and the auxiliary reciprocating engine 150.

### Citation List

### Patent Literature

PTL 1: Japanese Laid-Open Patent Application Publication No. 2015-145243

### Summary of Invention

### Technical Problem

In the ship 100 shown in Fig. 4, the liquefied natural gas is forcibly vaporized at the forcing vaporizer 171. In other words, not only methane but also heavy components in the liquefied natural gas are vaporized. For this reason, the methane number of the vaporization gas generated at the forcing vaporizer 171 is lower than that of the boil off gas. In order to stabilize the combustion of the main reciprocating engine 130 or the auxiliary reciprocating engine 150, it is desired to supply the vaporization gas with a suitable methane number to the main reciprocating engine 130 or the auxiliary reciprocating engine 150 even when the liquefied natural gas is vaporized.

In order to realize this, in the ship 100 shown in Fig. 4, it is conceivable to cool the vaporization gas generated at the forcing vaporizer 171 by a cooler to condense heavy components in the vaporization gas, and remove the condensed heavy components by a gas-liquid separator.

Generally speaking, the forcing vaporizer 171 heats the liquefied natural gas by using a high-temperature fluid, such as steam. By such a forcing vaporizer 171, the vaporization gas with a stable methane number can be supplied to the main reciprocating engine 130 or the auxiliary reciprocating engine 150 when the flow rate of the liquefied natural gas is high. However, when the flow rate of the liquefied natural gas is low, the temperature of the vaporization gas flowing out of the cooler varies greatly since the temperature difference between the high-temperature fluid and the liquefied natural gas is great. Therefore, when the flow rate of the liquefied natural gas is low, the methane number of the vaporization gas supplied to the main reciprocating engine 130 or the auxiliary reciprocating engine 150 becomes unstable.

In view of the above, an object of the present invention is to provide a ship capable of stabilizing the methane number of the vaporization gas supplied to the gas-consuming apparatus when the flow rate of the liquefied natural gas is low.

### Solution to Problem

In order to solve the above-described problems, a ship according to the present invention includes: a gas-consuming apparatus for propulsion; a tank storing liquefied natural gas; a first supply line provided with a compressor, the first supply line leading boil off gas generated in the tank to the gas-consuming apparatus; a branch line whose both ends are connected to the first supply line at an upstream side of the compressor; a second supply line that takes the liquefied natural gas out of the tank, and leads vaporization gas resulting from vaporization of the liquefied natural gas to the gas-consuming apparatus or another gas-consuming apparatus; a heat exchanger that performs heat exchange between the liquefied natural gas flowing through the second supply line and the boil off gas flowing through the branch line; an adjustment valve that adjusts a flow rate of the boil off gas flowing through the branch line; and a controller that controls the adjustment valve such that, under a predetermined condition, a temperature of the liquefied natural gas flowing out of the heat exchanger is kept to a setting temperature.

The temperature of the boil off gas is higher than the temperature of the liquefied natural gas due to the influence of, for example, thermal stratification in the tank. Therefore, according to the above configuration, the liquefied natural gas can be vaporized by utilizing the sensible heat of the boil off gas when the flow rate of the liquefied natural gas is low. That is, a ship that does not require a forcing vaporizer and a cooler, or a ship in which it is not necessary to operate the forcing vaporizer and the cooler when the flow rate of the liquefied natural gas is low, can be realized. Moreover, since the temperature difference between the boil off gas and the liquefied natural gas is relatively small, the temperature of the liquefied natural gas flowing out of the heat exchanger can be suppressed from varying greatly. Furthermore, since the temperature of the liquefied natural gas flowing out of the heat exchanger is kept to the setting temperature, the vaporization gas with a substantially constant methane number can be supplied to the gas-consuming apparatus for propulsion or the other gas-consuming apparatus.

For example, the predetermined condition may be when the heat exchanger is able to heat the liquefied natural gas to the setting temperature by utilizing the boil off gas.

The above ship may further include a thermometer that detects the temperature of the liquefied natural gas flowing out of the heat exchanger. The controller may control the adjustment valve such that, under the predetermined condition, the temperature of the liquefied natural gas detected by the thermometer is kept to the setting temperature. The adjustment valve can be controlled based on a detection value of a flowmeter provided on the second supply line, such that the temperature of the liquefied natural gas flowing out of the heat exchanger is kept to the setting temperature. However, by comparing the temperature of the liquefied natural gas detected by the thermometer with the setting temperature, more precise control can be performed.

The branch line may be a first branch line. The above ship may further include: a forcing vaporizer provided on the second supply line at a downstream side of the heat exchanger; a cooler provided on the second supply line at a downstream side of the forcing vaporizer; a gas-liquid separator provided on the second supply line at a downstream side of the cooler; a second branch line that branches off from the second supply line between the heat exchanger and the forcing vaporizer, and merges with the second supply line between the cooler and the gas-liquid separator or at a downstream side of the gas-liquid separator; and a switching valve switchable between an allowing state in which the switching valve allows the liquefied natural gas to flow into the forcing vaporizer and a prohibiting state in which the switching valve prohibits the liquefied natural gas from flowing into the forcing vaporizer. According to this configuration, when the flow rate of the liquefied natural gas is low, by bringing the switching valve into the prohibiting state, the use of the forcing vaporizer and the cooler can be prevented. On the other hand, when the flow rate of the liquefied natural gas is high, by bringing the switching valve into the allowing state, a sufficient amount of vaporization gas can be supplied to the gas-consuming apparatus for propulsion or the other gas-consuming apparatus by using the forcing vaporizer and the cooler.

For example, the above ship may further include a flowmeter that detects a flow rate of the liquefied natural gas flowing through the second supply line at an upstream side of the heat exchanger. The controller may switch the switching valve to the allowing state when the flow rate of the liquefied natural gas detected by the flowmeter becomes higher than a setting flow rate, and may switch the switching valve to the prohibiting state when the flow rate of the liquefied natural gas detected by the flowmeter becomes lower than the setting flow rate.

The switching valve may be a three-way valve provided on the second supply line at a branch point where the second branch line branches off from the second supply line, and the second branch line may merge with the second supply line between the cooler and the gas-liquid separator. According to this configuration, when the switching valve is in the prohibiting state, a liquid phase (heavy components) in the liquefied natural gas that has turned into a gas-liquid two-phase state by passing through the heat exchanger can be removed by utilizing the gas-liquid separator provided at the downstream side of the cooler.

The gas-liquid separator may be a first gas-liquid separator. The above ship may further include: a second gas-liquid separator provided on the second supply line at a branch point where the second branch line branches off from the second supply line; and a return line that branches off from the second supply line between the second gas-liquid separator and the forcing vaporizer, and is connected to the tank. The switching valve may be a three-way valve provided on the second supply line at a branch point where the return line branches off from the second supply line. The second branch line may receive a gas phase that has been separated from a liquid phase at the second gas-liquid separator, and merge with the second supply line at a downstream side of the first gas-liquid separator. According to this configuration, when the switching valve is in the prohibiting state, a liquid phase (heavy components) in the liquefied natural gas that has turned into a gas-liquid two-phase state by passing through the heat exchanger can be returned to the tank through the return line, and when the switching valve is in the allowing state, the liquefied natural gas in the gas-liquid two-phase state can be prevented from flowing into the forcing vaporizer.

### Advantageous Effects of Invention

The present invention makes it possible to stabilize the methane number of the vaporization gas supplied to the gas-consuming apparatus when the flow rate of the liquefied natural gas is low.

### Brief Description of Drawings

Fig. 1 shows a schematic configuration of a ship according to Embodiment 1 of the present invention.
Fig. 2 shows a schematic configuration of a ship according to Embodiment 2 of the present invention.
Fig. 3 shows a schematic configuration of a ship according to Embodiment 3 of the present invention.
Fig. 4 shows a schematic configuration of a conventional ship.

### Description of Embodiments

### (Embodiment 1)

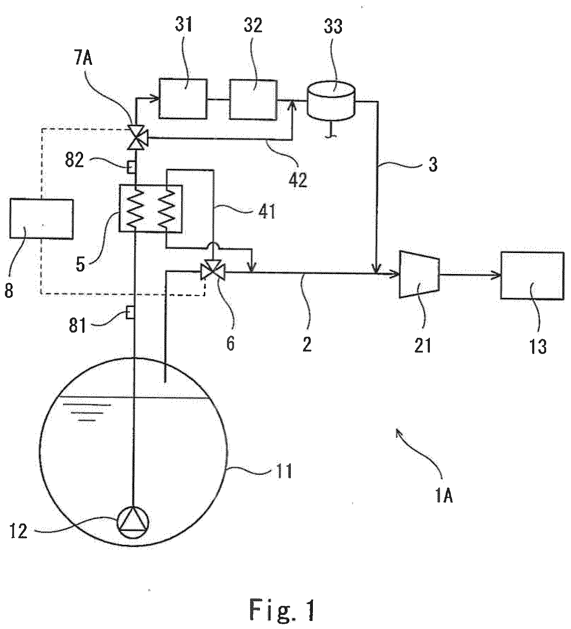

Fig. 1 shows a ship 1A according to Embodiment 1 of the present invention. The ship 1A includes a tank 11 storing liquefied natural gas (hereinafter, "LNG") and a gas engine 13, which is a gas-consuming apparatus for propulsion. Alternatively, the gas-consuming apparatus for propulsion may be, for example, a gas-fired boiler.

In the illustrated example, only one tank 11 is provided. However, as an alternative, a plurality of tanks 11 may be provided. Also, in the illustrated example, only one gas engine 13 is provided. However, as an alternative, a plurality of gas engines 13 may be provided.

The gas engine 13 may directly drive a screw propeller (not shown) to rotate (i.e., mechanical propulsion), or may drive the screw propeller to rotate via a power generator and a motor (i.e., electric propulsion).

In the present embodiment, the gas engine 13 is a reciprocating engine with intermediate or high fuel gas injection pressure. The gas engine 13 may be a pure gas engine that combusts only a fuel gas, or may be a dual fuel engine that combusts one of or both a fuel gas and a fuel oil. It should be noted that the gas engine 13 may be a gas turbine engine.

The ship 1A includes: a first supply line 2, which leads boil off gas (hereinafter, "BOG") generated in the tank 11 to the gas engine 13; and a second supply line 3, which takes the LNG out of the tank 11 and leads vaporization gas (hereinafter, "VG") resulting from vaporization of the LNG to the gas engine 13.

In the present embodiment, the second supply line 3 is used when the amount of BOG generation is less than the amount of gas consumption by the gas engine 13 (e.g., when the load on the gas engine 13 is high or ultra-high). That is, the second supply line 3 is not used when the load on the gas engine 13 is intermediate or low. It should be noted that there is a case where the amount of BOG generation becomes greater than the amount of gas consumption by the gas engine 13 when the load on the gas engine 13 is low. In this case, excess gas may be re-liquefied and returned to the tank 11, or may be supplied to an unshown gas engine intended for onboard power supply, or may be treated by a gas treatment apparatus (e.g., GCU).

The tank 11 is connected to the gas engine 13 by the first supply line 2. The first supply line 2 is provided with a compressor 21. The compressor 21 compresses the BOG to an intermediate or high pressure. However, for example, in a case where the gas engine 13 is an engine with low fuel gas injection pressure, the compressor 21 may be a low-pressure compressor.

A pump 12 is disposed in the tank 11. The pump 12 is connected to the first supply line 2 by the second supply line 3. In the present embodiment, the second supply line 3 is connected to the first supply line 2 at the upstream side of the compressor 21. However, for example, if the second supply line 3 is provided with a compressor, the second supply line 3 may be connected to the first supply line 2 at the downstream side of the compressor 21.

The second supply line 3 is provided with a forcing vaporizer 31, a cooler 32, and a gas-liquid separator 33, which are arranged in this order from the upstream side. The forcing vaporizer 31 forcibly vaporizes the LNG discharged from the pump 12 to generate the VG. The cooler 32 cools the VG generated at the forcing vaporizer 171 to condense heavy components in the VG (ethane, propane, butane, etc.). The gas-liquid separator 33 removes the condensed heavy components from the VG. The heavy components removed by the gas-liquid separator 33 are returned to the tank 11.

The present embodiment further adopts a configuration for vaporizing the LNG flowing through the second supply line 3 by utilizing the BOG. The temperature of the BOG is higher than the temperature of the LNG due to the influence of, for example, thermal stratification in the tank 11. For example, in the tank 11, the temperature of the BOG is -90°C, and the temperature of the LNG is -162°C. On the other hand, the temperature of the LNG taken out of the tank 11 is, for example, about -150°C. Even when the temperature of the LNG is increased to about -150°C, methane in the LNG remains liquid owing to the pressurization by the pump 12.

Specifically, a first branch line 41 is connected to the first supply line 2 in a manner to bypass a part of the first supply line 2 at the upstream side of the compressor 21. In other words, both ends of the first branch line 41 are connected to the first supply line 2 at the upstream side of the compressor 21. The ship 1A is further provided with a heat exchanger 5, which performs heat exchange between the LNG flowing through the second supply line 3 at the upstream side of the forcing vaporizer 31 and the BOG flowing through the first branch line 41.

The flow rate of the BOG flowing through the first branch line 41 is adjusted by an adjustment valve 6. In the present embodiment, the adjustment valve 6 is a distributing valve provided on the first supply line 2 at a branch point where the first branch line 4 branches off from the first supply line 2 (i.e., the upstream end of the first branch line 4). That is, the adjustment valve 6 is capable of arbitrarily changing a ratio between the BOG that passes through the heat exchanger 5 (i.e., the BOG that flows through the first branch line 41) and the BOG that does not pass through the heat exchanger 5 (i.e., the BOG that passes through the adjustment valve 6 and flows through the first supply line 2) within a range from 0%:100% to 100%:0%.

Although not illustrated, the adjustment valve 6 may be configured as a pair of flow control valves that are: a flow control valve provided on the first supply line 2 between both ends of the first branch line 4; and a flow control valve provided on the first branch line 41. Alternatively, the adjustment valve 6 may be configured only as a flow control valve provided on the first branch line 41.

The adjustment valve 6 is controlled by a controller 8. When the flow rate of the LNG flowing through the second supply line 3 is low, by increasing the flow rate of the BOG flowing through the first branch line 41 in accordance with increase in the flow rate of the LNG, a temperature T of the LNG flowing out of the heat exchanger 5 can be made constant. The controller 8 controls the adjustment valve 6 such that, under a predetermined condition, the temperature T of the LNG flowing out of the heat exchanger 5 is kept to a setting temperature Ts. For example, the predetermined condition is when the heat exchanger 5 is able to heat the LNG to the setting temperature Ts by utilizing the BOG, i.e., when the flow rate of the LNG flowing through the second supply line 3 is low. In the present embodiment, the predetermined condition is when a flow rate Q of the LNG, the flow rate Q being detected by a flowmeter 81 described below, is lower than a setting flow rate Qs.

The setting temperature Ts can be arbitrarily set within a range between the temperature of the LNG and the temperature of the BOG. For example, the setting temperature Ts is a temperature at which methane in the LNG is vaporized while large part of heavy components in the LNG remains liquid (e.g., -120°C).

In the present embodiment, the second supply line 3 is provided with a thermometer 82, which detects the temperature T of the LNG flowing out of the heat exchanger 5. The controller 8 controls the adjustment valve 6 such that the temperature T of the LNG detected by the thermometer 82 is kept to the setting temperature Ts under the predetermined condition.

A second branch line 42 is connected to the second supply line 3 in a manner to bypass the forcing vaporizer 31 and the cooler 32. That is, the second branch line 42 branches off from the second supply line 3 between the heat exchanger 5 and the forcing vaporizer 31, and merges with the second supply line 3 between the cooler 32 and the gas-liquid separator 33.

A three-way valve 7A is provided on the second supply line 3 at a branch point where the second branch line 42 branches off from the second supply line 3. The three-way valve 7A is switchable between a first state and a second state. In the first state, the three-way valve 7A brings a part of the second supply line 3 upstream of the three-way valve 7A into communication with a part of the second supply line 3 downstream of the three-way valve 7A. In the second state, the three-way valve 7A brings the part of the second supply line 3 upstream of the three-way valve 7A into communication with the second branch line 42. In other words, the first state is an allowing state in which the three-way valve 7A allows the LNG to flow into the forcing vaporizer 31, and the second state is a prohibiting state in which the three-way valve 7A prohibits the LNG from flowing into the forcing vaporizer 31. That is, the three-way valve 7A corresponds to a switching valve of the present invention.

The three-way valve 7A is controlled by the controller 8. The second supply line 3 is provided with the flowmeter 81, which detects the flow rate Q of the LNG flowing through the second supply line 3 at the upstream side of the heat exchanger 5. The controller 8 switches the three-way valve 7A to the first state (allowing state) when the flow rate Q of the LNG detected by the flowmeter 81 becomes higher than the setting flow rate Qs, and switches the three-way valve 7A to the second state (prohibiting state) when the flow rate Q of the LNG detected by the flowmeter 81 becomes lower than the setting flow rate Qs.

The setting flow rate Qs is, for example, a limit flow rate. That is, when the flow rate of the LNG becomes higher than the limit flow rate, it means that the flow rate of the LNG exceeds the heat exchange capacity of the heat exchanger 5, and as a result, the temperature T of the LNG flowing out of the heat exchanger 5 cannot be kept to the setting temperature Ts. It should be noted that the setting flow rate Qs may be a value less than the limit flow rate by a predetermined percent.

When the flow rate Q of the LNG detected by the flowmeter 81 becomes higher than the setting flow rate Qs, the controller 8 controls the adjustment valve 6 such that the entire amount of BOG passes through the adjustment valve 6 and flows through the first supply line 2, i.e., such that the BOG does not flow through the first branch line 41.

As described above, the ship 1A of the present embodiment is provided with the heat exchanger 5, which performs heat exchange between the LNG flowing through the second supply line 3 and the BOG flowing through the first branch line 41. Accordingly, the LNG can be vaporized by utilizing the sensible heat of the BOG when the flow rate of the LNG is low. That is, when the flow rate of the LNG is low, it is not necessary to operate the forcing vaporizer 31 and the cooler 32. Moreover, since the temperature difference between the BOG and LNG is relatively small, the temperature of the LNG flowing out of the heat exchanger 5 can be suppressed from varying greatly. Furthermore, since the temperature T of the LNG flowing out of the heat exchanger 5 is kept to the setting temperature Ts through the control of the adjustment valve 6, the VG with a substantially constant methane number can be supplied to the gas engine 13.

In the present embodiment, since the three-way valve 7A and the second branch line 42 are provided, when the flow rate of the LNG is low, by bringing the three-way valve 7A into the second state (i.e., the state in which the LNG flows through the second branch line 42), the use of the forcing vaporizer 31 and the cooler 32 can be prevented. On the other hand, when the flow rate of the LNG is high, by bringing the three-way valve 7A into the first state (i.e., the state in which the LNG does not flow through the second branch line 42), a sufficient amount of VG can be supplied to the gas engine 13 by using the forcing vaporizer 31 and the cooler 32.

In addition, since the second branch line 42 merges with the second supply line 3 between the cooler 32 and the gas-liquid separator 33, when the three-way valve 7A is in the second state, a liquid phase (heavy components) in the LNG that has turned into a gas-liquid two-phase state by passing through the heat exchanger 5 can be removed by utilizing the gas-liquid separator 33 provided at the downstream side of the cooler 32.

### <Variations>

The switching valve of the present invention is not necessarily the three-way valve 7A, but may be configured as a pair of on-off valves that are: an on-off valve provided on the second supply line 3 between the forcing vaporizer 31 and the branch point at which the second branch line 42 branches off from the second supply line 3; and an on-off valve provided on the second branch line 42.

The three-way valve 7A and the second branch line 42 may be eliminated. In such a case, when the flow rate of the LNG flowing through the second supply line 3 is low, the forcing vaporizer 31 and the cooler 32 need to be stopped from operating.

The thermometer 82 may be eliminated, and even in such a case, the adjustment valve 6 can be controlled based on a detection value of the flowmeter 81 provided on the second supply line 3, such that the temperature T of the LNG flowing out of the heat exchanger 5 is kept to the setting temperature Ts. However, by comparing the temperature T of the LNG detected by the thermometer 82 with the setting temperature Ts, more precise control can be performed. This variation is applicable also to Embodiment 2 described below. It should be noted that in the case of controlling the adjustment valve 6 based on a detection value of the flowmeter 81, a necessary BOG flow rate for keeping the temperature T of the LNG flowing out of the heat exchanger 5 to the setting temperature Ts can be calculated based on, for example, the detection value of the flowmeter 81. Therefore, the first branch line 41 may be also provided with a flowmeter, and the adjustment valve 6 may be controlled such that a detection value of the flowmeter is the calculated necessary flow rate.

### (Embodiment 2)

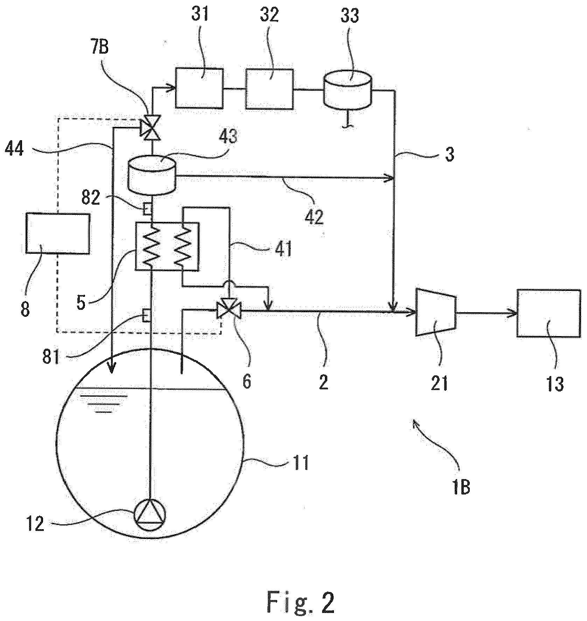

Fig. 2 shows a ship 1B according to Embodiment 2 of the present invention. It should be noted that, in the present embodiment and the following Embodiment 3, the same components as those described in Embodiment 1 are denoted by the same reference signs as those used in Embodiment 1, and repeating the same descriptions is avoided.

In the present embodiment, the gas-liquid separator 33 is a first gas-liquid separator 33, and a second gas-liquid separator 43 is provided on the second supply line 3 at the branch point where the second branch line 42 branches off from the second supply line 3. The adjustment valve 6 is controlled in the same manner as in Embodiment 1. When the amount of LNG flowing through the second supply line 3 is small, the second gas-liquid separator 43 separates the LNG that has turned into a gas-liquid two-phase state by passing through the heat exchanger 5 into a liquid phase and a gas phase. On the other hand, when the amount of LNG flowing through the second supply line 3 is large, the BOG does not flow through the first branch line 41, and almost 100% of the LNG flowing out of the heat exchanger 5 is in a liquid phase. For this reason, the second gas-liquid separator 43 does not function much.

The second branch line 42 receives the gas phase that has been separated from the liquid phase at the second gas-liquid separator 43. The second branch line 42 merges with the second supply line 3 at the downstream side of the first gas-liquid separator 33.

Further, in the present embodiment, a return line 44 is provided. The return line 44 branches off from the second supply line 3 between the second gas-liquid separator 43 and the forcing vaporizer 31, and is connected to the tank 11.

A three-way valve 7B is provided on the second supply line 3 at a branch point where the return line 44 branches off from the second supply line 3. The three-way valve 7B is switchable between a first state and a second state. In the first state, the three-way valve 7B brings a part of the second supply line 3 upstream of the three-way valve 7B into communication with a part of the second supply line 3 downstream of the three-way valve 7B. In the second state, the three-way valve 7B brings the part of the second supply line 3 upstream of the three-way valve 7B into communication with the return line 44. In other words, the first state is an allowing state in which the three-way valve 7B allows the LNG to flow into the forcing vaporizer 31, and the second state is a prohibiting state in which the three-way valve 7B prohibits the LNG from flowing into the forcing vaporizer 31. That is, the three-way valve 7B corresponds to the switching valve of the present invention.

The three-way valve 7B is controlled by the controller 8. The controller 8 switches the three-way valve 7B to the first state (allowing state) when the flow rate Q of the LNG detected by the flowmeter 81 becomes higher than the setting flow rate Qs, and switches the three-way valve 7B to the second state (prohibiting state) when the flow rate Q of the LNG detected by the flowmeter 81 becomes lower than the setting flow rate Qs.

Also in the present embodiment, similar to Embodiment 1, the VG with a substantially constant methane number can be supplied to the gas engine 13 through the control of the adjustment valve 6. Additionally, in the present embodiment, since the three-way valve 7B and the second branch line 42 are provided, when the flow rate of the LNG is low, by bringing the three-way valve 7B into the second state (the state in which the LNG flows through the return line 44), the use of the forcing vaporizer 31 and the cooler 32 can be prevented. On the other hand, when the flow rate of the LNG is high, by bringing the three-way valve 7B into the first state (i.e., the state in which the LNG does not flow through the return line 44), a sufficient amount of VG can be supplied to the gas engine 13 by using the forcing vaporizer 31 and the cooler 32.

Moreover, in the present embodiment, when the three-way valve 7B is in the second state, a liquid phase (heavy components) in the LNG that has turned into a gas-liquid two-phase state by passing through the heat exchanger 5 can be returned to the tank 11 through the return line 44, and when the three-way valve 7B is in the first state, the LNG in the gas-liquid two-phase state can be prevented from flowing into the forcing vaporizer 31.

### <Variations>

The switching valve of the present invention is not necessarily the three-way valve 7B, but may be configured as a pair of on-off valves that are: an on-off valve provided on the second supply line 3 between the forcing vaporizer 31 and the branch point at which the return line 44 branches off from the second supply line 3; and an on-off valve provided on the return line 44.

The three-way valve 7B, the return line 44, and the second branch line 42 may be eliminated. In such a case, when the flow rate of the LNG flowing through the second supply line 3 is low, the forcing vaporizer 31 and the cooler 32 need to be stopped from operating.

### (Embodiment 3)

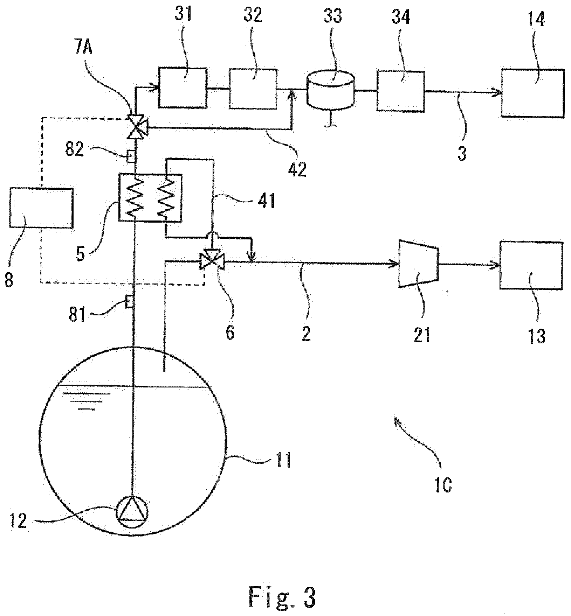

Fig. 3 shows a ship 1C according to Embodiment 3 of the present invention. In the present embodiment, the gas engine 13 is a main gas engine 13, and the second supply line 3 leads the VG not to the main gas engine 13 but to an auxiliary gas engine 14, which is a gas-consuming apparatus for onboard power supply. In the illustrated example, only one auxiliary gas engine 14 is provided. However, as an alternative, a plurality of auxiliary gas engines 14 may be provided.

The auxiliary gas engine 14 is a reciprocating engine with intermediate or low fuel gas injection pressure, and is coupled to a power generator (not shown). The auxiliary gas engine 14 may be a pure gas engine that combusts only a fuel gas, or may be a dual fuel engine that combusts one of or both a fuel gas and a fuel oil.

A heater 34 is provided on the second supply line 3 at the downstream side of the gas-liquid separator 33. The heater 34 heats the VG that has passed through the gas-liquid separator 33 to a temperature suited for the supply of the VG to the auxiliary gas engine 14.

Also in the present embodiment, owing to the same functions as those described in Embodiment 1, the VG with a substantially constant methane number can be supplied to the auxiliary gas engine 14. Other advantageous effects of the present embodiment owing to, for example, the three-way valve 7A and the second branch line 42 are the same as those described in Embodiment 1.

### <Variations>

Similar to the present embodiment, the second supply line 3 of Embodiment 2 may lead the VG to the auxiliary gas engine 14.

### (Other Embodiments)

The present invention is not limited to the above-described Embodiments 1 to 3. Various modifications can be made without departing from the spirit of the present invention.

For example, there is a case where, depending on the rated output of the gas engine 13, only when the load on the gas engine 13 is ultra-high, the second supply line 3 is required to be used to vaporize a small amount of LNG. In this case, the forcing vaporizer 31 and the cooler 32 need not be provided on the second supply line 3. That is, there is a case where the presence of the forcing vaporizer 31 and the cooler 32 is unnecessary, so long as the heat exchanger 5 is present.

Not only the BOG but also, for example, nitrogen (N2) generated in the ship can be used as a fluid for use in heating the LNG at the heat exchanger 5.

### Reference Signs List

1A∼1C ship
13 gas engine, main gas engine (gas-consuming apparatus)
14 auxiliary gas engine (gas-consuming apparatus)
2 first supply line
21 compressor
3 second supply line
31 forcing vaporizer
32 cooler
33 gas-liquid separator, first gas-liquid separator
41 first branch line
42 second branch line
43 second gas-liquid separator
44 return line
5 heat exchanger
6 adjustment valve
7A, 7B three-way valve (switching valve)
8 controller
81 flowmeter
82 thermometer

## Claims

1. A ship comprising:
a gas-consuming apparatus for propulsion;
a tank storing liquefied natural gas;
a first supply line provided with a compressor, the first supply line leading boil off gas generated in the tank to the gas-consuming apparatus;
a branch line whose both ends are connected to the first supply line at an upstream side of the compressor;
a second supply line that takes the liquefied natural gas out of the tank, and leads vaporization gas resulting from vaporization of the liquefied natural gas to the gas-consuming apparatus or another gas-consuming apparatus;
a heat exchanger that performs heat exchange between the liquefied natural gas flowing through the second supply line and the boil off gas flowing through the branch line;
an adjustment valve that adjusts a flow rate of the boil off gas flowing through the branch line; and
a controller that controls the adjustment valve such that, under a predetermined condition, a temperature of the liquefied natural gas flowing out of the heat exchanger is kept to a setting temperature.

2. The ship according to claim 1, wherein
the predetermined condition is when the heat exchanger is able to heat the liquefied natural gas to the setting temperature by utilizing the boil off gas.

3. The ship according to claim 1 or 2, further comprising a thermometer that detects the temperature of the liquefied natural gas flowing out of the heat exchanger, wherein
the controller controls the adjustment valve such that, under the predetermined condition, the temperature of the liquefied natural gas detected by the thermometer is kept to the setting temperature.

4. The ship according to any one of claims 1 to 3, wherein
the branch line is a first branch line, and
the ship further comprises:
a forcing vaporizer provided on the second supply line at a downstream side of the heat exchanger;
a cooler provided on the second supply line at a downstream side of the forcing vaporizer;
a gas-liquid separator provided on the second supply line at a downstream side of the cooler;
a second branch line that branches off from the second supply line between the heat exchanger and the forcing vaporizer, and merges with the second supply line between the cooler and the gas-liquid separator or at a downstream side of the gas-liquid separator; and
a switching valve switchable between an allowing state in which the switching valve allows the liquefied natural gas to flow into the forcing vaporizer and a prohibiting state in which the switching valve prohibits the liquefied natural gas from flowing into the forcing vaporizer.

5. The ship according to claim 4, further comprising a flowmeter that detects a flow rate of the liquefied natural gas flowing through the second supply line at an upstream side of the heat exchanger, wherein
the controller switches the switching valve to the allowing state when the flow rate of the liquefied natural gas detected by the flowmeter becomes higher than a setting flow rate, and switches the switching valve to the prohibiting state when the flow rate of the liquefied natural gas detected by the flowmeter becomes lower than the setting flow rate.

6. The ship according to claim 4 or 5, wherein
the switching valve is a three-way valve provided on the second supply line at a branch point where the second branch line branches off from the second supply line, and
the second branch line merges with the second supply line between the cooler and the gas-liquid separator.

7. The ship according to claim 4 or 5, wherein
the gas-liquid separator is a first gas-liquid separator,
the ship further comprises:
a second gas-liquid separator provided on the second supply line at a branch point where the second branch line branches off from the second supply line; and
a return line that branches off from the second supply line between the second gas-liquid separator and the forcing vaporizer, and is connected to the tank,
the switching valve is a three-way valve provided on the second supply line at a branch point where the return line branches off from the second supply line, and
the second branch line receives a gas phase that has been separated from a liquid phase at the second gas-liquid separator, and merges with the second supply line at a downstream side of the first gas-liquid separator.
